# EUROPÄISCHE PATENTSCHRIFT

(11) **EP 3 465 879 B1**
(45) Veröffentlichungstag und Bekanntmachung des Hinweises auf die Patenterteilung: **05.10.2022**
(21) Anmeldenummer: 17734234.2
(22) Anmeldetag: 06.06.2017
(51) Int. Cl.: H02K 1/28, H02K 7/00, F16D 1/072

(54) **ALS FLÜGELRAD FÜR EINE FLÜSSIGKEITSPUMPE AUSGEBILDETES MAGNETROTATIONSBAUTEIL**
MAGNETIC ROTATION COMPONENT FORMED AS AN IMPELLER FOR A LIQUID PUMP
COMPOSANT ROTATIF MAGNÉTIQUE FORMÉ COMME ROUE POUR UNE POMPE À LIQUIDE

(30) Priorität: 06.06.2016 DE 202016102995 U
(43) Veröffentlichungstag der Anmeldung: 10.04.2019
(73) Patentinhaber: Max Baermann Gesellschaft mit beschränkter Haftung, 51429 Bergisch Gladbach (DE)
(72) Erfinder: ZEITZHEIM, Martin, 56235 Ransbach-Baumbach (DE)
(74) Vertreter: Lippert Stachow Patentanwälte Rechtsanwälte
(86) Internationale Anmeldenummer: PCT/EP2017/000650
(87) Internationale Veröffentlichungsnummer: WO 2017/211449

(56) Entgegenhaltungen:
- CH-A- 346 518
- DE-A1- 4 205 248
- DE-A1-102008 004 588
- DE-A1-102011 079 225
- DE-A1-102015 210 705
- DE-U1- 8 603 982
- DE-U1- 8 603 982
- DE-U1- 8 705 698
- US-A- 4 652 169
- US-A1- 2003 222 527

## Beschreibung

Die Erfindung betrifft ein als Flügelrad für eine Flüssigkeitspumpe, wie Wasserpumpe oder Zusatzkühlmittelpumpe, ausgebildetes Magnetrotationsbauteil, das ein Magnetbauteil und ein Rotationsbauteil mit Rotationsachse aufweist, wobei das Magnetbauteil und das Rotationsbauteil jeweils einen Bördelbereich aufweisen und das Magnetbauteil als ringartiger Magnet, insbesondere als Ringmagnet oder Ringsegmentmagnet, ausgebildet ist, das Flügelrad ein Flügelteil umfasst und das Rotationsbauteil als das Flügelteil ausgebildet ist und das Magnetbauteil und das Flügelteil fest miteinander verbunden sind, das Magnetbauteil und das Flügelteil über eine Bördelung fest miteinander verbunden angeordnet sind und das Flügelteil mit Hohlwelle zur Auflagerung auf einer Achse oder Welle ausgebildet ist.

Ein derartiges als Flügelrad ausgebildetes Magnetrotationsbauteil ist aus der DE 87 05 698 U1 bekannt. Das Flügelrad umfasst ein Flügelteil mit Luftschaufel als Rotationsbauteil sowie ein aus Weicheisen oder Sintereisen bestehendes Magnetbauteil. Das Magnetbauteil ist nach außen mittels eines Blechteils abgedeckt, das um einen hülsenförmigen Bereich des Rotationsbauteils und um einen in einen scheibenförmigen Bereich des Rotationsbauteils eingesetzten Ring herumgebördelt ist. Das nach außen mittels des Blechteils abgedeckte Magnetbauteil aus Weicheisen oder Sintereisen ist in Gestalt eines Hohlkugelabschnittes ausgebildet und erstreckt sich vom äußeren Rand des scheibenförmigen Bereichs des Rotationsbauteils bis in den Bereich des Endes des hülsenförmigen Bereichs des Rotationsbauteils.

Aus der US 2003/0222527 A1 ist ein Rotor einer Flüssigkeitspumpe mit einem Magnetbauteil bekannt, das mehrere Permanentmagneten umfasst. Die Permanentmagneten sind um einen Hohlkugelabschnitt herum innerhalb einer Umhüllung desselben im Stator angeordnet. Der die Magnete aufweisende Rotor bildet mit einem Flügelrad der Flüssigkeitspumpe, durch eine ebene Fläche getrennt, eine bauliche Einheit.

Die DE 2011 079 225 A1 offenbart ein als Permanentmagnet ausgebildetes Magnetbauteil, das formschlüssig mit einem als Flügelrad ausgebildeten Rotationsbauteil einer Flüssigkeitspumpe verbunden ist.

Die in Deutschland vorangemeldete und nachveröffentlichte DE 10 2015 210 705 A1 betrifft einen Kreiselpumpenrotor, bestehend aus einer Permanentmagnetanordnung, wie einem Permanentmagnetring oder dachrinnenartigen Permanentmagnetsegmenten, sowie einem Flügelteil mit einem rohrförmigen Bereich und einem scheibenförmigen Bereich. Zur Befestigung der Permanentmagnetanordnung am Flügelteil ist eine die Permanentmagnetanordnung umgreifende Metallhülle vorgesehen, die topfförmig ausgebildet ist und an ihrem Topfrand einen sich radial nach innen erstreckenden Bördelrand aufweist, der einen

Stützrand des scheibenförmigen Bereichs des Fügeteils umbördelt.

Ein als Flügelrad ausgebildetes Magnetrotationsbauteil ist auch aus der DE 298 15 163 Ul bekannt. Dieses Dokument offenbart eine Kreiselpumpe mit einem als Rotor ausgebildeten Magnetbauteil mit einem hohlzylindrischen Dauermagneten, der auf ein dessen Kern füllendes, sich axial erstreckendes Kunststoffelement aufgepresst ist. Das Magnetbauteil und ein als Schaufelrad mit radialen Schaufeln ausgebildetes Rotationsbauteil sind aufwändig über einen in axialer Verlängerung des Kunststoffelements ausgebildeten Axialzapfen fest miteinander verbunden.

Ein als Flügelrad ausgebildetes Magnetrotationsbauteil geht ebenfalls aus der US 4,652,169 A hervor. Das aus einer Nabe mit Flügeln bestehende Flügelteil ist mit der Antriebswelle eines Motors fest verbunden. Dazu erstrecken sich die Flügel von einem scheibenförmigen Bereich mit einer zentralen Bohrung aus, der über eine Bördelung mit der buchsenförmigen Nabe des Flügelrades verbunden ist. Die buchsenförmigen Nabe ist mittels einer in eine radiale Gewindebohrung der Nabe einsetzbaren Schraube an der Antriebswelle des Motors befestigbar.

Die DE 42 05 248 A1 offenbart ein als Laufrad für Ventilatoren ausgebildetes Flügelrad, das auf einer Antriebswelle eines Antriebsaggregates befestigbar ist. Das Laufrad weist eine Radnabe mit einem stirnseitigen Nabenhals auf, an dem eine Radscheibe mit Flügeln angeordnet ist. Gehalten wird die Radscheibe auf dem Nabenhals mittels Bördelung des stirnseitigen Endabschnitts des Nabenhalses nach außen.

Eine Aufgabe der Erfindung ist, ein als Flügelrad für eine Flüssigkeitspumpe, wie Wasserpumpe oder Zusatzkühlmittelpumpe, ausgebildetes Magnetrotationsbauteil bereitzustellen, das einfach aufgebaut sowie einfach und kostengünstig montierbar ist sowie einen erhöhten Wirkungsgrad aufweist.

Die gestellte Aufgabe wird erfindungsgemäß durch die Merkmale des Anspruchs 1 gelöst. Vorteilhafte Weiterbildungen werden in den Unteransprüchen beschrieben. Die gestellte Aufgabe wird bereits dadurch gelöst, dass das Magnetbauteil einen Permanentmagnet aufweist und die Bördelbereiche des Magnetbauteils und des Rotationsbauteils sich zur Ausbildung der Bördelung überlappen.

Mittels der erfindungsgemäßen Bördelung kann überraschend einfach und kostengünstig die Verbindung zwischen dem Magnetbauteil und dem Flügelteil eines Flügelrads der eingangs genannten Art hergestellt werden. Die Bördelung kann hierbei auf einfache Weise maschinell erfolgen.

Beide Bauteile bilden eine bauliche Einheit aus . Vorzugsweise können beide Bauteile und insbesondere die bauliche Einheit eine Zylindergeometrie mit der Drehachse als Zylinderachse aufweisen. Es können beide Bauteile, eventuell bis auf kleine konstruktive Abweichungen, eine zur Drehachse rotationssymmetrische Form aufweisen.

Mit der Rotationsachse ist auch die Möglichkeit der Rotationswelle einbezogen, wobei das Magnetrotationsbauteil im Falle der Rotationswelle drehfest auf derselben und im Falle der Rotationsachse drehbar auf derselben angeordnet ist.

Insbesondere kann das Magnetrotationsbauteil bezüglich der Drehachse drehbeweglich zu einer konstruktiven Umgebung angeordnet sein.

Dies schließt insbesondere ein, dass das Magnetrotationsbauteil und/oder die konstruktive Umgebung bezüglich einer Basis einer Vorrichtung mit dem Magnetrotationsbauteil und der konstruktiven Umgebung drehbeweglich angeordnet sein können. Das heißt insbesondere, dass, jeweils bezüglich der Basis, die konstruktive Umgebung fest und das Magnetrotationsbauteil über die Drehachse drehfest oder das Magnetrotationsbauteil fest und die konstruktive Umgebung über die Drehachse drehbeweglich angeordnet sein können. Alternativ können auch die konstruktive Umgebung und das Magnetrotationsbauteil bezüglich der Basis beweglich, insbesondere drehbeweglich zur Drehachse, angeordnet sein, wobei zugleich bezüglich der Drehachse eine relative Drehbeweglichkeit zwischen konstruktiver Umgebung und Magnetrotationsbauteil vorgesehen ist.

Insbesondere kann das Magnetrotationsbauteil in die konstruktive Umgebung insbesondere drehbeweglich eingebettet angeordnet sein. Insbesondere kann die konstruktive Umgebung eine Lagerung der Drehachse des Magnetrotationsbauteils sein.

Das Magnetrotationsbauteil kann in einer Verbindung, insbesondere in einer Wirkverbindung mit der konstruktiven Umgebung stehen.

Insbesondere kann diese Wirkverbindung über das Magnetfeld des Magnetteils erfolgen. Insbesondere kann die konstruktive Umgebung dadurch gekennzeichnet sein, dass das Magnetrotationsbauteil insbesondere über das Magnetfeld seines Magnetteils funktionsgedingt auf die konstruktive Umgebung einwirkt.

Dies kann beispielsweise dadurch geschehen, indem das Magnetrotationsbauteil als Rotor für einen elektrischen Antrieb eingesetzt wird. Ferner beispielsweise dadurch, dass die konstruktive Umgebung einen Sensor aufweist, der bezüglich der Drehachse drehbeweglich zu dem Magnetrotationsbauteil angeordnet ist.

Das Magnetrotationsbauteil weist eine Hohlwelle oder Hülse auf, über die es auf der Rotationsachse drehbar bzw. auf der Rotationswelle verdrehfest gelagert ist. Die Hohlwelle oder Hülse ist Teil des als Flügelteil ausgebildeten Rotationsbauteils. Beide Bauteile sind mittels der Bördelung drehfest miteinander verbunden.

Mittels der Bördelung wird zumindest eine axial verschiebungsfeste und insbesondere verdrehfeste Verbindung erzielt. Die Bördelung erfolgt über eine vorzugsweise elastisch-plastische Umformung insbesondere durch Stauchen und/oder durch Dehnung.

Erfindungsgemäß ist vorgesehen, dass das Magnetbauteil und das Rotationsbauteil jeweils einen Bördelbereich aufweisen, die sich zur Ausbildung der Bördelung überlappen. Vorteilhaft einfach kann der Bördelbereich ringförmig ausgebildet sein. Der Bördelbereich kann teilumfänglich oder vollumfänglich ausgeführt sein. Insbesondere kann der Bördelbereich segmentartig, insbesondere kreisringsegmentartig, oder alternativ als Kreisringform oder Polygonringform ausgebildet sein. Dies ist vorteilhaft bei Rotations- oder Drehachsensymmetrien der Bauteile.

Es können Magnetbauteil und/oder Rotationsbauteil mehrere Bördelbereiche aufweisen, wobei sich einander zugeordnete Bördelbereiche von Magnetbauteil und Rotationsbauteil überlappen. Insbesondere können die Bördelbereiche hinsichtlich einer Verbindungsdauerfestigkeit günstig umfänglich voneinander beabstandet angeordnet sein.

Vorzugsweise erfolgt die Verbindung zwischen den beiden Bauteilen, das heißt von Magnetbauteil und Rotationsbauteil, allein über die Bördelung. Die Bördelung kann dadurch erfolgen, dass der Bördelbereich eines der Bauteile den des anderen Bauteiles umbördelt oder dass die Bördelbereiche der beiden Bauteile ineinander greifend umbördeln.

Insbesondere kann vorgesehen sein, dass die einander zugeordneten Bördelbereiche zu ihrer Verbördelung hakenartig ineinandergreifend angeordnet sind.

Abhängig von der Biegefestigkeit der verwendeten Werkstoffe können die Bördelbereiche beispielsweise unter Ausbildung einer Pittsburghfalz mit Stehfalz zu einer festen, nur unter zumindest teilweiser Zerstörung lösbaren Verbindung miteinander verbunden sein.

Es können, insbesondere bei spröden Werkstoffen, wie sie häufig bei Magneten anzutreffen sind, hinsichtlich einer möglichen Verformung der Bördelbereiche Grenzen gesetzt sein.

So können die Bördelbereiche mittels eines Schnappfalzes mit Nockenstehfalz zu einer verrastenden Steckverbindung miteinander verbunden sein. Letztere hat den Vorteil, dass die Steckverbindung mit Einstecken des Nockenstehfalzes die der Schnapppfalz unter Verrastung durch allein federelastisches Aufbiegen der Schnappfalz erfolgt.

Insbesondere kann bei dem Bauteil aus einem spröderen Werkstoff, wie das Magnetbauteil, der Nockenstehfalz vorgesehen sein. Dieser kann mit der Formung des Magnetbauteils vorzugsweise vollständig ausgeformt sein.

Alternativ oder zusätzlich zur reinen Bördelung, d.h. zur Bördelung ohne zusätzliche Bauteile, kann ein Bördelteil vorgesehen sein, das die einander zugeordneten Bördelbereiche von Magnetbauteil und Rotationsbauteil aneinander festlegt. Die bauliche Einheit mit Magnetbauteil, Rotationsbauteil und Bördelteil kann somit aus drei über Bördelung fest miteinander verbundenen Bauteilen bestehen.

Vorzugsweise ist das Bördelteil an die Geometrien von Magnetbauteil und Rotationsbauteil angepasst. Es kann auch aus mehreren Segmenten oder Teilstücken aufgebaut sein, die Magnetbauteil und Rotationsbauteil unter Umbördelung zusammenhalten. Es kann auch einen Grundkörper aufweisen, von dem vorzugsweise fahnenartig ein Vorsprung oder mehrere fahnenartige Vorsprünge ausgehen, der bzw. die Magnetbauteil und Rotationsbauteil zur Bördelung umbördeln. Vorzugsweise sind die Vorsprünge umfänglich gleich beabstandet und vorzugsweise von einem Umfangskreis ausgehend von dem Grundkörper ausgehend angeordnet. Es können, vorzugsweise in einer alternierenden Reihenfolge, sich vom dem Grundkörper weg erstreckende erste Vorsprünge in einer vorzugsweise zur Drehachse axialen Richtung und sich in hierzu entgegengesetzter Richtung erstreckende zweite Vorsprünge vorgesehen sein. Mechanisch vorteilhaft kann das Bördelteil eine zur vorgesehenen Drehachse rotationssymmetrische Form aufweisen. Das Bördelteil kann beispielsweise einen kreissegmentartige Vorsprung oder mehrere, insbesondere drei oder vier kreissegmentartige Vorsprünge aufweisen.

Der Bördelteil kann allgemein der Geometrie des Magnetrotationsbauteils angepasst ausgebildet sein. Das Bördelteil kann beispielsweise ringförmig ausgebildet sein. Diese Ringform kann teilumfänglich oder vollumfänglich ausgebildet sein.

Insbesondere kann das Bördelteil als Bördelring oder Bördelringsegment ausgebildet sein, der bzw. das die Bördelbereiche von Magnetbauteil und Rotationsbauteil übergreifend miteinander verklammert.

Der Bördelring bzw. das Bördelringsegment kann einen runden, wie kreisrunden oder ellipsoiden Umriss oder einen eckigen, wie polygonen, insbesondere vier- oder sechseckigen Umriss aufweisen.

In einer vorteilhaften Ausführungsform des Magnetrotationsbauteils können die Bördelbereiche bezüglich der Rotationswelle radial außen und/oder radial innen insbesondere zum Magnetbauteil angeordnet sein.

Insbesondere können das Magnetbauteil und/oder das Rotationsbauteil bezüglich der Rotationswelle rotationssymmetrisch und/oder drehsymmetrisch ausgebildet sein. Hierbei kann diese Symmetrie geringfügige Abweichungen von einer reinen, das heißt geometrisch exakten Rotationssymmetrie bzw. Drehsymmetrie aufweisen.

Allein mittels der oben beschriebenen Verbördelung kann eine feste Verbindung der beiden Bauteile erzielt werden. Dennoch kann zur weiteren Sicherung der relativen Lage der beiden Bauteile zueinander eine insbesondere rein mechanisch wirksame Verdrehsicherung gegen eine relative Verdrehung von Magnetbauteil und Rotationbauteil um die Rotationswelle vorgesehen sein. Insbesondere ist vorgesehen, dass mittels der Verdrehsicherung die beiden Bauteile bezüglich einer Ebene senkrecht zur Rotationswelle verschiebungsfest aneinander anliegend verbunden sind.

Vorteilhaft kann zur Verdrehsicherung eine Steckverbindung vorgesehen sein, über die die beiden Bauteile vorzugsweise axial ineinander greifen.

Insbesondere kann die Verdrehsicherung an einem Bauteil, das heißt an dem Magnetbauteil und/oder dem Rotationsbauteil, einen Vorsprung, insbesondere Zapfen aufweisen, der unter Ausbildung der Steckverbindung vorzugweise axial in eine zugeordnete an dem anderen Bauteil, das heißt an dem Rotationsbauteil oder dem Magnetbauteil, vorgesehene Ausnehmung eingreift. Es können auch mehrere insbesondere auf einem Umfangkreis zur Drehachse und insbesondere umfänglich gleich beabstandete Vorsprünge, insbesondere Zapfen vorgesehen sein, die zur Ausbildung der Steckverbindung jeweils vorzugweise axial in eine zugeordnete an dem anderen Bauteil, das heißt an dem Rotationsbauteil oder dem Magnetbauteil, vorgesehene Ausnehmung eingreifen. Hierbei kann die Steckverbindung zugleich als Zentrierhilfe zur Zentrierung der Bauteile dienen.

In einer konstruktiv einfachen Ausbildung des Magnetrotationsbauteils können die beiden Bauteile in der Verbindungsposition über die Verdrehsicherung unmittelbar axial und insbesondere flächig aneinander anliegen. Insbesondere können die beiden Bauteile in der Verbindungsposition stirnseitig aneinander anliegen. Konstruktiv einfach können die Ausnehmungen jeweils als Durchgangsausnehmung ausgebildet sein.

Bereits mittels der ineinandergreifenden Steckverbindung bei der Montage der Bauteile kann eine Zentrierung derselben bezüglich der Drehachse erfolgen. Ferner kann eine Zentrierung über das Ineinandergreifen der Bördelbereiche beim Bördeln erfolgen.

Vorzugsweise ist insbesondere zur Vorzentrierung vorgesehen, dass die beiden Bauteile zur Montage auf einem Zentrierkern aufgezogen werden. Hierbei ist dessen Längsachse gleich der Rotationsachse.

Insbesondere können Magnetbauteil und Rotationbauteil in der Verbindungsposition unter axialer elastischer Vorspannung angeordnet sein.

Es können Magnetbauteil und Rotationbauteil in der Verbindungsposition axial über einen Spalt beabstandet angeordnet sein. In einer möglichen Konstruktion können die Ausnehmungen jeweils als Sackausnehmung ausgebildet sein. Insbesondere können die Zapfen in der Verbindungsposition in der jeweils zugeordneten Sackausnehmung bodenseitig anliegend angeordnet sein.

Zur Spaltbildung mit Anlage der beiden Bauteile aneinander kann die axiale Höhe der Zapfen größer als die axiale Tiefe der jeweils zugeordneten Ausnehmung ausgelegt sein. Damit können die beiden Bauteile mit Herstellung der Bördelverbindung unter Annäherung im Spalt axial zueinander federelastisch verspannt werden. Hierbei wird eine geringe federelastische Verspannung bevorzugt. Diese kann bis zu fünf Newton (N), insbesondere bis zu 2,5 N oder bis zu 1,1 N betragen.

In einer wirtschaftlich und konstruktiv vorteilhaften Ausführungsform des Magnetrotationsbauteils kann das Magnetbauteil einstückig ausgebildet sein. Insbesondere kann das Magnetbauteil bevorzugt vollständig aus kunststoffgebundenen insbesondere pulverförmigen Dauermagnetteilchen ausgebildet sein. Hierzu können die Dauermagnetteilchen in bekannter Form in einer Kunststoffmatrix eingebettet angeordnet sein.

Vorteilhaft einfach kann das Magnetbauteil oder zumindest Teile desselben als Spritzgussteil, Pressteil oder Sinterbauteil hergestellt sein.

Um eine schädliche Verformung des Magnetbauteils bei der Bördelung zu vermeiden, kann vorgesehen sein, dass beispielsweise auch die oben beschriebenen Steckverbindung sowie die oben beschriebenen Bördelbereiche mit allen erforderlichen Geometrien, insbesondere mit Haken, allein mittels Spritzguss, Pressung oder Sintern ausgeformt werden. Somit kann das Magnetbauteil bei der Bördelung durch das Rotationsbauteil umbördelt werden, ohne dabei überhaupt plastisch verformt zu werden.

Desgleichen kann das Rotationsteil einstückig ausgebildet sein. Damit kann das Magnetrotationsbauteil in seiner einfachsten Ausführung lediglich aus zwei Bauteilen, dem Magnetbauteil und dem Rotationbauteil, gefertigt sein. Mit dem oben beschriebenen zusätzlichen Bördelteil zur Bördelung sind es maximal drei Bauteile.

Das Magnetbauteil ist als ringartiger Magnet, vorzugsweise als Ringmagnet oder Ringsegmentmagnet ausgebildet. Vorteilhaft kann das Magnetbauteil eine rotationssymmetrische Form aufweisen. Insbesondere das Magnetbauteil als Hohlzylindermagnet ausgebildet sein. Das Magnetbauteil kann als Stator oder Rotor zum Antrieb des Magnetrotationsbauteils beispielsweise durch ein elektrisches Drehfeld dienen.

Zum ungestörten Durchfluss der Flüssigkeit durch die Hohlwelle kann der Innendurchmesser des Magnetbauteils größer, insbesondere mehr als doppelt so groß, wie der Innendurchmesser der Hohlwelle sein.

Vorzugsweise sind Hohlzylindermagnet und Flügelteil mit Rotationsachse axial im Wesentlichen hintereinander angeordnet. Hierbei können sie sich im Bereich der Bördelung und/oder der Verdrehsicherung axial überlappen.

Insbesondere können zur vertauschungssicheren Montage des Magnetrotationsbauteils beispielsweise auf einer Rotationswelle oder Rotationsache gemäß dem Poka-Yoke-System als fehlervermeidendes Prinzip vorzugsweise rein mechanisch wirksame Mittel vorgesehen sein.

Die vorliegende Erfindung wird im Folgenden anhand mehrerer in einer Zeichnung dargestellten Ausführungsformen der Führung näher erläutert, ohne jedoch die Erfindung hierauf zu beschränken. In der Zeichnung zeigen:
FIG.1 eine Seitenansicht einer ersten Ausführungsform eines als Flügelrad ausgebildeten Magnetrotationsbauteils,
FIG.2 eine Aufsicht des Magnetrotationsbauteils gemäß Figur 1,
FIG.3 eine Schnittansicht des Magnetrotationsbauteils gemäß dem Schnittverlauf A-A gemäß Figur 1,
FIG.4 eine Schnittansicht des Magnetrotationsbauteils gemäß dem Schnittverlauf B-B gemäß Figur 2,
FIG.5 eine Detailansicht des Magnetrotationsbauteils gemäß dem Ausschnitt V in Figur 3,
Fig.6 eine Aufsicht einer zweiten Ausführungsform eines als Flügelrad ausgebildeten Magnetrotationsbauteils,
FIG.7 eine Seitenansicht des Magnetrotationsbauteils gemäß Figur 6,
FIG.8 eine Schnittansicht des Magnetrotationsbauteils gemäß dem Schnittverlauf C-C gemäß Figur 6,
FIG.9 eine Schnittansicht des Magnetrotationsbauteils gemäß dem Schnittverlauf D-D gemäß Figur 7 und
FIG.10 eine Detailansicht des Magnetrotationsbauteils gemäß dem Ausschnitt X in Figur 9.

In der Beschreibung sind sämtliche Begrifflichkeiten zur Beschreibung der Örtlichkeit wie oben, unten, vorn, hinten, rechts und links so gemeint, wie sie in der jeweiligen Figur selbst gezeigt ist, es sei denn, es ist eigens anders definiert.

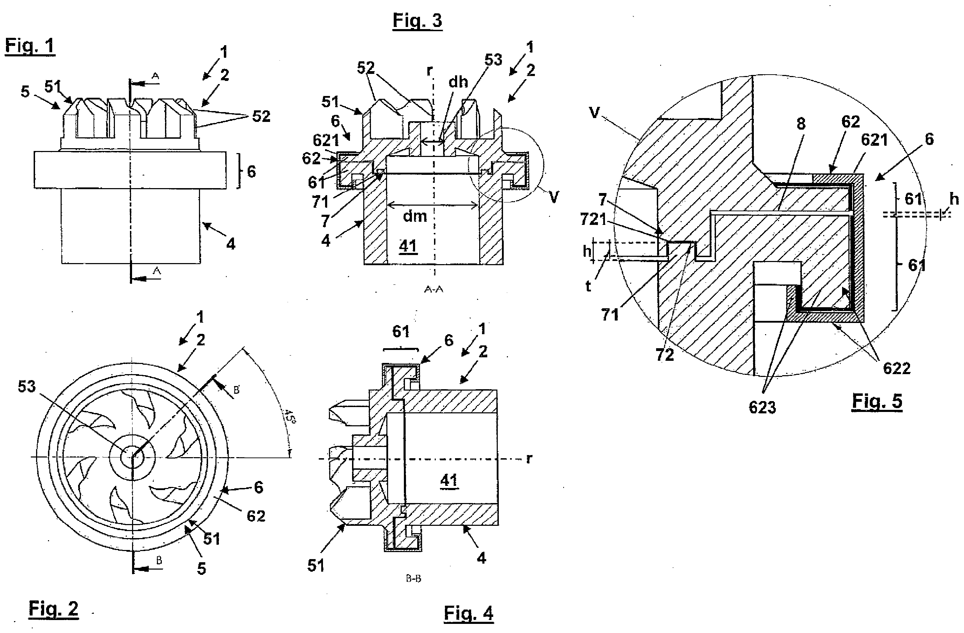

In den Figuren 1 bis 5 bzw. 6 bis 10 wird eine erste bzw. eine zweite Ausführungsform eines Magnetrotationsbauteils 1 in verschiedenen Ansichten gezeigt, wobei das Magnetrotationsbauteil 1 hier als Flügelrad 2 ausgebildet ist.

In allen Ausführungsformen weist das Magnetrotationsbauteil 1 ein Magnetbauteil 4 und ein Rotationsbauteil 5 mit Rotationsachse r auf, wobei das Magnetbauteil 4 und das Rotationsbauteil 5 über eine Bördelung 6 fest miteinander verbunden sind.

Wie den Figuren entnehmbar, ist das Magnetrotationsbauteil 1 in all seinen Ausführungsformen symmetrisch ausgebildet. Hierbei sind das Rotationsbauteil 5 gemäß den Figuren 1 bis 10 bezüglich der Rotationsachse r aufgebaut. Desgleichen ist das Magnetbauteil 4 beider Bauteile 4, 5 ebenfalls im Wesentlichen rotationssymmetrisch ausgebildet. Im Wesentlichen heißt hier jeweils, dass die Grundform des Magnetrotationsbauteils 1 entsprechend rotationssymmetrisch aufgebaut ist, jedoch Symmetrieab-weichungen hinsichtlich beispielsweise der weiter unten eingeführten Flügel 52 und/oder der Zapfen 71 aufweisen kann.

Wie den Figuren entnehmbar, weisen das Magnetbauteil 4 und das Rotationsbauteil 5 jeweils mindestens einen ringförmigen oder ringsegmentförmigen Bördelbereich 61 auf, wobei sich die Bördelbereiche 61 der beiden Bauteile 4,5 überlappen.

Gemäß den Figuren 1 bis 10 ist zur Verbindung von Magnetbauteil 4 mit Rotationsbauteil 5 zusätzlich ein Bördelteil 62 vorgesehen. Ohne die Erfindung darauf beschränken zu wollen, ist in den hier gezeigten Ausführungsformen das Bördelteil 62 in Anpassung an die hier im Wesentlichen zylindrischen Geometrie des Magnetrotationsbauteils 1 als Bördelring 621 ausgebildet.

Wie insbesondere den Figuren 3, 4, 8 und 9 entnehmbar, übergreift der Bördelring 621 die beiden Bördelbereiche 61 von Magnetbauteil 4 und Rotationsbauteil 5. Der Bördelring 621 umgreift die Bördelbereiche 61 des Magnetbauteils 4 und des Rotationsbauteils 5 axial über den gesamten Umfang. Hierbei liegt der Bördelring 621 axial von oben flach auf dem Rotationsbauteil 5 auf, während er hakenartig in den hier ebenfalls hakenartig ausgebildeten Bördelbereich 61 des Magnetbauteils 4 eingreift.

Zum hakenartigen Ineinandergreifen weisen die Bördelbereiche 61 bzw. der Bördelring 621 jeweils ein ringförmiges im Profil doppelt gebogenes Hakenprofil 622 auf. Das Hakenprofil 622 ist somit mit einem U-förmigen hier rechtwinkligen Hakenprofil 622 versehen, das mit seinem freien Ende 623 in Richtung der Rotationsachse r weist. In beiden Fällen wird über das hakenartige Ineinandergreifen der Bördelbereiche 61 bzw. des Bördelring 621 in den Bördelbereich 61 des Magnetbauteils 4 eine bezüglich einer Ebene senkrecht zur Rotationsachse r verschiebungsfeste Verbindung geschaffen. Eine Verdrehfestigkeit ist hierbei durch eine reibschlüssige Anlage der Bördelbereiche 61 bzw. des Bördelrings 621 aneinander gegeben.

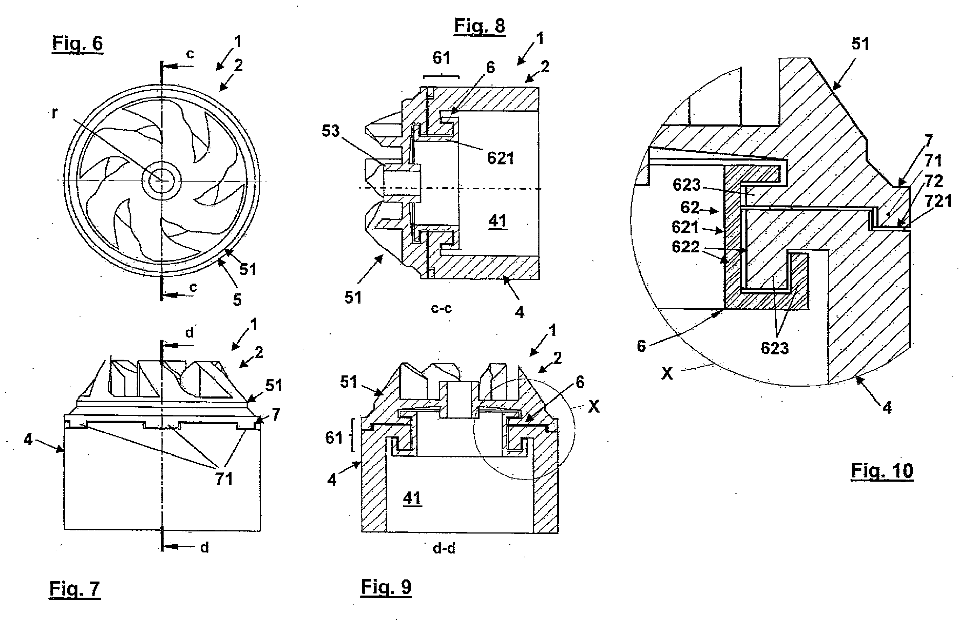

Die Bördelbereiche 61 von Magnetbauteil 4 und Rotationsbauteil 5 sind in den Ausführungsformen gemäß den Figuren 6 bis 10 radial innen zu dem Magnetbauteil 4 und damit geschützt in einem vom Magnetbauteil 4 begrenzten Innenraum 41 angeordnet. Abweichend hierzu sind in den übrigen Ausführungsformen gemäß den Figuren 1 bis 5 jeweils radial außen und damit zur Montage mit Bördelung 6 leichter zugänglich angeordnet.

Insbesondere ist eine hier rein mechanisch wirksame Verdrehsicherung 7 gegen eine relative Verdrehung vom Magnetbauteil 4 und Rotationsbauteil 5 um die Rotationsachse r vorgesehen.

Die Verdrehsicherung 7 weist hierzu an einem der beiden Bauteile 4, 5 mehrere zur Rotationsachse r auf einem Umkreis liegende umfänglich gleich beabstandete axiale Zapfen 71 auf, die bezüglich der Rotationsachse r axial jeweils in eine zugeordnete an dem anderen Bauteil 5, 4 vorgesehene Ausnehmung 72 unter Ausbildung einer Steckverbindung eingreifen. Hierbei sind die Zapfen 71 in den Ausführungsformen des Magnetrotationsbauteils 1 gemäß den Figuren 1 bis 10 an dem Rotationsbauteil 5 und die Ausnehmungen 72 an dem Magnetbauteil 4 angeordnet.

Bei den in den Ausführungsformen des Magnetrotationsbauteils 1 gemäß den Figuren 1 bis 10 sind sechs umfänglich um 60° beabstandete Zapfen vorgesehen.

Bei den Ausführungsformen des Magnetrotationsbauteils 1 gemäß den Figuren 6 bis 10 liegen Magnetbauteil 4 und Rotationsbauteil 5 in der Verbindungsposition axial flächig einander an. Eine hierzu abweichende Ausbildung des Magnetrotationsbauteils wird anhand der Detaildarstellung V gemäß Fig. 5 verdeutlich, die hier die erste Ausführungsform des als Flügelrad 2 ausgebildeten Magnetrotationsbauteil 1 betrifft: Hier ist eine axiale Höhe h der Zapfen 71 größer als eine axiale Tiefe t der Ausnehmungen 72, wobei diese jeweils als Sackausnehmungen 721 ausgebildet sind. Hierdurch stoßen die Zapfen 71 in der Verbindungsposition bodenseitig jeweils in der zugeordneten Sackausnehmung 721 unter Ausbildung eines in der Ebene senkrecht zur Rotationsachse r liegenden Ringspalts 8 mit geringer Spalthöhe s zwischen Magnetbauteil 4 und Rotationsbauteil 5 an. Die Spalthöhe h bewegt sich hier im Zehntelmillimeterbereich.

Die Überbördelung der Bördelbereiche 71 von Magnetbauteil 4 und Rotationsbauteil 5 mit dem Bördelring 621 kann so eingestellt werden, dass sich Magnetbauteil 4 und Rotationsbauteil 5 im Bereich des Ringspalts 8 geringfügig annähern und somit im gewünscht geringen Maße federelastisch verformen, wobei die Werkstoffkomponenten dieser Bauteile 4, 5 zumindest in deren Bördelbereiche 61 so gewählt sind, dass sich ausschließlich das Rotationsbauteil 5 federelastisch verspannt. Durch diese federelastische Verspannung kann eine erhöhte Festigkeit und Verminderung einer Lcckerungsfahr der Bördelung 6 erzielt werden.

Bei dem als Flügelrad 2 ausgebildeten Magnetrotationsbauteil ist das Rotationsbauteil 5 als Flügelteil 51 mit sich axial weg erstreckenden Flügeln 52 und mit Hohlwelle 53 oder Hülse ausgebildet, die in Einbaulage auf der Rotationsachse r einer hier nicht weiter gezeigten konstruktiven Umgebung frei drehbar gelagert ist.

### Als Flügelrad für eine Flüssigkeitspumpe ausgebildetes Magnetrotationsbauteil

### Bezugszeichenliste

- 1: Magnetrotationsbauteil
- 2: Flügelrad
- 4: Magnetbauteil
- 41: Innenraum
- 5: Rotationsbauteil
- 51: Flügelteil
- 52: Flügel
- 53: Hohlwelle
- 6: Bördelung
- 61: Bördelbereich
- 62: Bördelteil
- 621: Bördelring
- 622: Hakenprofil
- 623: Ende
- 7: Verdrehsicherung
- 71: Zapfen
- 72: Ausnehmung
- 721: Sackausnehmung
- 8: Ringspalt
- dm: Innendurchmesser
- dh: Innendurchmesser
- h: Höhe
- r: Rotationsachse
- s: Spalthöhe
- t: Tiefe

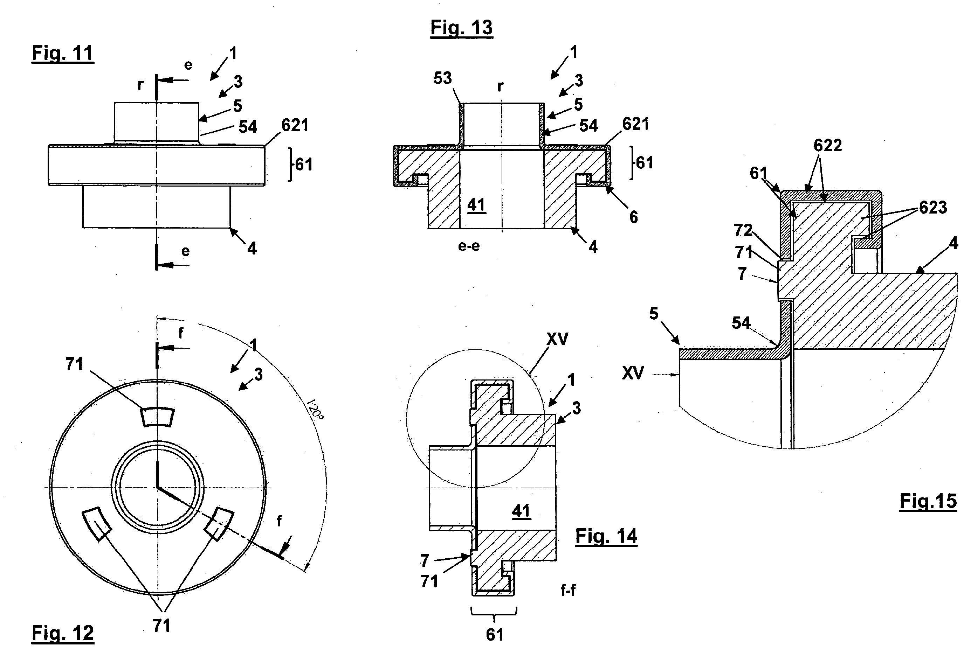

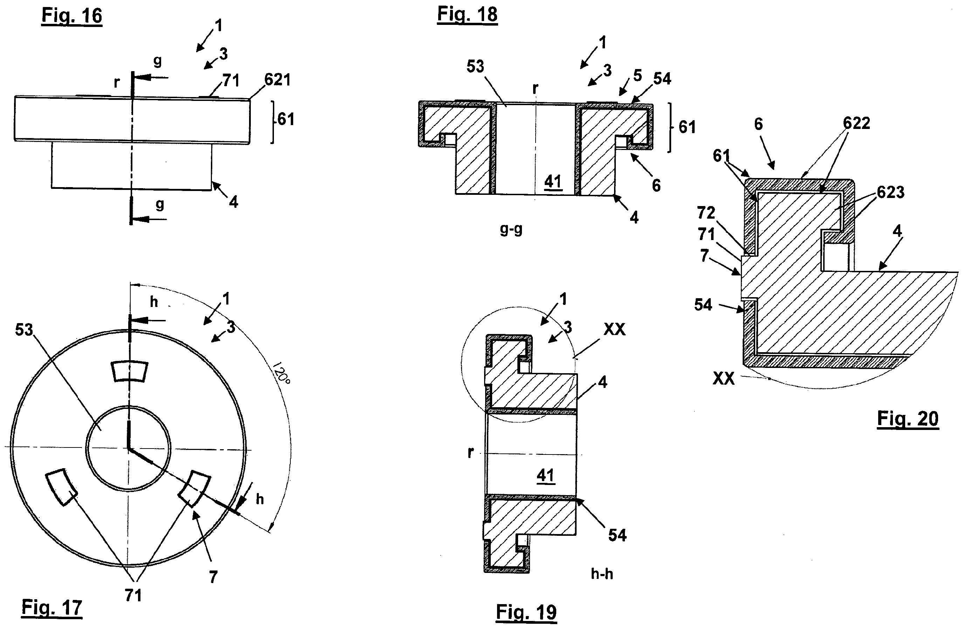

Lagerhülse 54 und Magnetbauteil 4 sind bei dem Drehmomentmagnetbauteil 3 in der Ausführungsform gemäß den Figuren 11 bis 15 bis auf die sich überlappenden Bördelbereiche 61 hintereinander angeordnet. Gemäß den Figuren 16-20 bzw. 24-26 sind Lagerhülse 54 und Magnetbauteil 4 koaxial mit der Lagerhülse 54 radial innen zum Magnetbauteil 4 angeordnet, wobei das Magnetbauteil 4 in den Figuren 16-20 unter Stabilisierung des Drehmomentmagnetbauteil 3 radial außen unmittelbar auf der Lagerhülse 54 aufliegt.

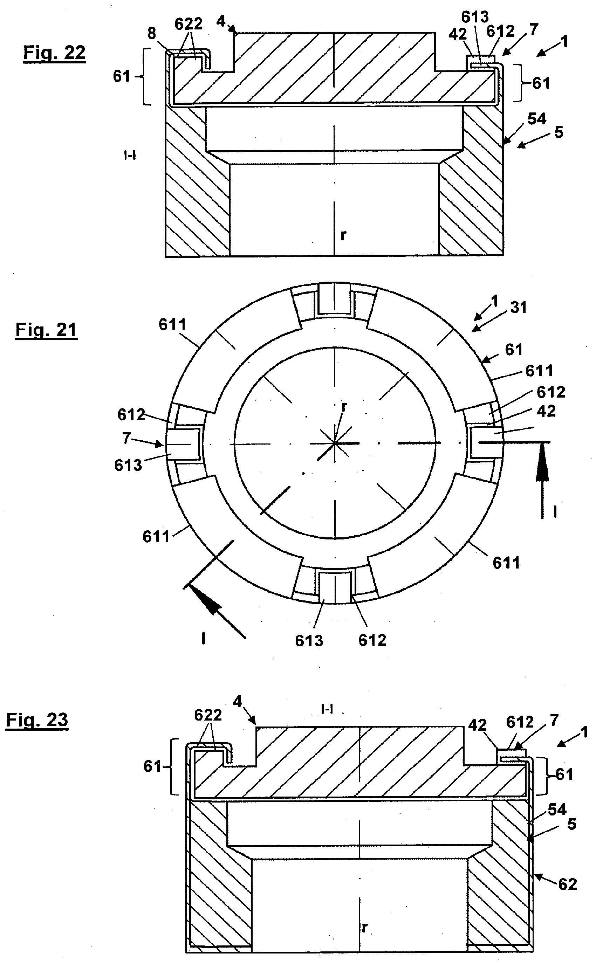

In den Figuren 21-23 ist das Magnetrotationsbauteil 1 als Topfmagnet 31 ausgebildet. Die Lagerhülse 54 ist hier koaxial und über den Spalt 8 beabstandet zu dem Magnetbauteil 4 angeordnet. Das Magnetbauteil 4 weist einen scheibenartigen ringförmigen Dauermagneten mit einem radial äußeren Bördelbereich 61 mit Hakenprofil 622 auf. Desgleichen weist die Lagerhülse 54 ein sich hier in axialer Richtung erstreckendes Hakenprofil 642 auf, wobei das Magnetbauteil 4 und die Lagerhülse 54 über die Hakenprofile 611 ineinandergreifen. In Ausbildung des Bördelbereichs 61 übergreift die Lagerhülse 54 mit einem axialen Abschnitt das Magnetbauteil 4 hier radial außen. Anschließend ist der Bördelbereich 61 der Lagerhülse 54 hakenartig radial nach innen gefalzt. Ferner ist der Bördelbereich 61 in vier umfänglich gleich beabstandete Kreissegmente 611 geteilt, die den Bördelbereich 61 des Magnetbauteils 4 hakenartig umbördeln. Umfänglich zwischen den Kreissegmenten 611 sind Lücken 612 vorgesehen, in denen die Verdrehsicherung 7 angeordnet ist. Hierzu weist das Magnetbauteil 4 für jede Lücke 612 einen radialen Einschnitt 42 auf, den die Lagerhülse mit einer radial nach innen weisenden Lasche so hakenartig durchgreift, dass diese mit einem bestimmten Spiel verdrehfest in der jeweils zugeordneten Lücke 612 angeordnet ist.

Eine alternative Ausführungsform hierzu zeigt Figur 23 in Zusammenhang mit Figur 21, indem hier zur Ausbildung der Bördelung 6 zusätzlich das Bördelteil 62 vorgesehen ist. Dieses übergreift klammerartig beide Bauteile, das Magnetbauteil 4 und die Lagerhülse 54, axial und radial außen. Magnetbauteil 4 und Lagerhülse 54 liegen axial über einen Spalt 8 beabstandet aneinander. Der Bördelbereich 61 des Bördelteils 62, mit dem das Bördelteil 62 das Magnetbauteil 4 übergreift, ist gleich dem Bördelbereich 61 der Lagerhülse 54 der Ausbildungsform des Magnetrotationsbauteils 1 gemäß Figur 22 ausgebildet. Mit dem Bördelbereich 61 am anderen Ende des Bördelteil 62 übergreift dasselbe das Rotationsbauteil 5, d.h. die Lagerhülse 54, radial nach innen. Beide Ausführungsformen des Magnetrotationsbauteils 1 gemäß den Figuren 21 bis 23 sind ausgelegt, um beispielsweise bei Drosselklappen bezüglich der Rotationsachse r einen bestimmten Drehwinkel zu selektieren.

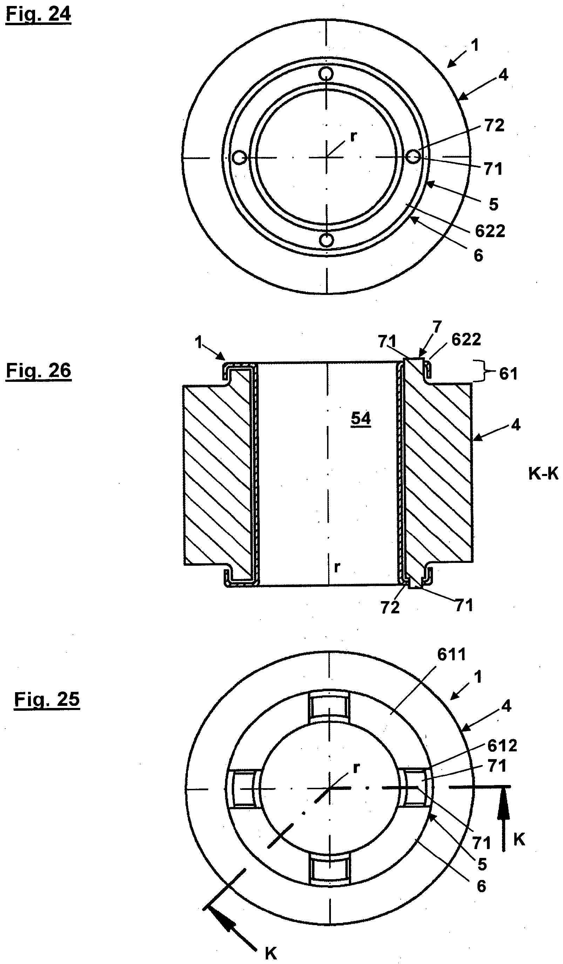

In der Ausführungsform des Magnetrotationsbauteils 1 gemäß den Figuren 24 bis 25 sind das Rotationsbauteil 5 als Lagerhülse 54, die beidendseitig Bördelbereiche 61 aufweist, und das Magnetbauteil 4 als im Wesentlichen hohlzylindrische Dauermagnet ebenfalls mit beidendseitigen Bördelbereichen 61 ausgebildet. Das Magnetbauteil 4 ist koaxial und radial außen zu der Lagerhülse 54 angeordnet. Konstruktiv einfach und montagefreundlich sind die Bördelbereiche 61 bezüglich einer mittleren Querschnittsebene als Symmetrieebene im Wesentlichen spiegelsymmetrisch zueinander ausgebildet.

Wie an den beiden Figuren 24 und 25, die jeweils eine stirnseitige Ansicht des Magnetrotationsbauteils 1 zeigen, ersichtlich, greift das Magnetbauteil 4 unter Ausbildung der Verdrehsicherung 7 unten und oben jeweils über Zapfen 71 in die Lagerhülse 54 ein. Hierzu sind die Zapfen 71 unten als Rundzapfen ausgebildet, die jeweils in eine ihnen zugeordnete an der Lagerhülse 54 vorgesehene entsprechende kreisrunde Ausnehmung 72 formschlüssig eingreifen. Ähnlich wie bei der oben beschriebenen Ausführungsform des Magnetrotationsbauteils 1 gemäß den Figuren 21 und 22, übergreift die Lagerhülse 54 in ihrem Bördelbereich 61 mittels vorgesehener Laschen 613 das Rotationsbauteil 5 hier in radial nach außen gehender Richtung und zwar jeweils durch einen im Magnetbauteil 4 vorgesehenen Einschnitt 42.

Zur Montage kann das Magnetbauteil 4 somit axial so über die Lagerhülse 54 geschoben werden, bis es unter endseitigem Anschlag mit seinen Zapfen 71 in die kreisrunden Ausnehmungen 72 der Lagerhülse 54 eingreift. Um einen lagestabilen Sitzes des Magnetbauteils 4 auf der Lagerhülse 54 zu erhalten, ist es anschließend nur noch notwendig, die Laschen 613 so hakenartig zu biegen, dass die Laschen 613 die jeweils zugeordnete Lücke 612 durchgreifen und anschließend unter Formschluss radial außen in axiale Richtung umgebogen zu dem anderen Ende der Lagerhülse 54 weisen.

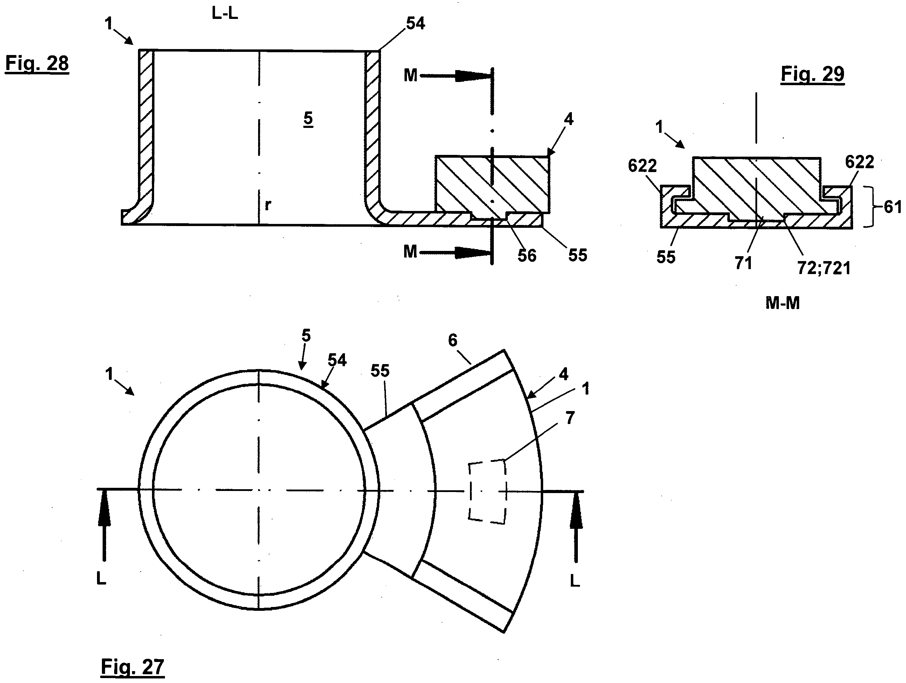

Die Ausführungsform des Magnetrotationsbauteils 1 gemäß den Figuren 27 bis 28 unterscheidet sich insbesondere darin, dass das Magnetbauteil 4 eine kreissegmentartige Form mit einem Segmentmagnet 43 aufweist. Dieser ist koaxial zur Lagerhülse 54 angeordnet. Der Segmentmagnet 43 kann beispielsweise unmittelbar radial innen an der Lagerhülse 54 anliegend angeordnet sein. Um jedoch einen messtechnisch günstigen größeren Abstand zur Drehachse r zu erhalten, ist bei der hier gezeigten Ausführungsform des Magnetrotationsbauteils 1 ein hier einstückig mit der Lagerhülse 54 verbundenes Abstandsteil 55 vorgesehen, das sich radial nach außen erstreckt und hier ebenfalls wie Segmentmagnet 43 eine kreissegmentartigen Form aufweist. Der Abstandshalter 55 weist eine Aufnahme 56 auf, die in umfänglicher Richtung beidseitig von dem Bördelbereich 61 begrenzt wird. Zur Montage muss lediglich der Segmentmagnet 43 in die Aufnahme 56 gelegt und mit den Bördelbereichen 71 umbördeln werden. Bodenseitig der Aufnahme 56 ist, wie den Längsschnittansichten gemäß den Figuren 28 und 29 entnehmbar, die Verdrehsicherung 7 vorgesehen. Hierzu weist der Segmentmagnet 43 unterseitig einen Zapfen 71, hier mit kreissegmentartigem Querschnitt, auf, der in Einbaulage formschlüssig in eine in die Aufnahme 56 eingelassene Ausnehmung 72 eingreift. Die Ausnehmung 72 ist dem Zapfen 71 angepasst ausgebildet. Die Ausnehmung 72 ist als Sackausnehmung ausgebildet.

Beide Ausführungsformen des Magnetrotationsbauteils gemäß den Figuren 24 bis 26 bzw. 27 bis 29 sind ausgelegt, um beispielsweise bestimmte Drehmomente bezüglich der Rotationsachse r zu selektieren.

### Magnetrotationsbauteil

### Bezugszeichenliste

- 1: Magnetrotationsbauteil
- 2: Flügelrad
- 3: Drehmomentmagnetbauteil
- 31: Topfmagnet
- 4: Magnetbauteil
- 41: Innenraum
- 42: Einschnitt
- 43: Segmentmagnet
- 5: Rotationsbauteil
- 51: Flügelteil
- 52: Flügel
- 53: Hohlwelle
- 54: Lagerhülse
- 55: Abstandshalter
- 56: Aufnahme
- 6: Bördelung
- 61: Bördelbereich
- 611: Kreissegment
- 612: Lücke
- 613: Lasche
- 62: Bördelteil
- 621: Bördelring
- 622: Hakenprofil
- 623: Ende
- 7: Verdrehsicherung
- 71: Zapfen
- 72: Ausnehmung
- 721: Sackausnehmung
- 8: Ringspalt
- dm: Innendurchmesser
- dh: Innendurchmesser
- h: Höhe
- r: Rotationsachse
- s: Spalthöhe
- t: Tiefe

## Patentansprüche

1. Als Flügelrad (2) für eine Flüssigkeitspumpe, wie Wasserpumpe oder Zusatzkühlmittelpumpe, ausgebildetes Magnetrotationsbauteil (1), das ein Magnetbauteil (4) und ein Rotationsbauteil (5) mit Rotationsachse (r) aufweist, wobei das Magnetbauteil (4) und das Rotationsbauteil (5) jeweils einen Bördelbereich (61) aufweisen und das Magnetbauteil (4) als ringartiger Magnet, insbesondere als Ringmagnet oder Ringsegmentmagnet, ausgebildet ist, das Flügelrad (2) ein Flügelteil (51) umfasst und das Rotationsbauteil (5) als das Flügelteil (51) ausgebildet ist und das Magnetbauteil (4) und das Flügelteil (51) fest miteinander verbunden sind, das Magnetbauteil (4) und das Flügelteil (51) über eine Bördelung (6) fest miteinander verbunden angeordnet sind und das Flügelteil (51) mit Hohlwelle (53) zur Auflagerung auf einer Achse oder Welle ausgebildet ist, **dadurch gekennzeichnet, dass** das Magnetbauteil (4) einen Permanentmagnet aufweist und die Bördelbereiche (61) des Magnetbauteils (4) und des Rotationsbauteils (5) sich zur Ausbildung der Bördelung (6) überlappen.

2. Magnetrotationsbauteil (1) nach Anspruch 1, **dadurch gekennzeichnet, dass** das Magnetbauteil (4) und das Rotationsbauteil (5) jeweils zumindest einen insbesondere ringförmigen oder ringsegmentförmigen Bördelbereich (61) aufweisen, in dem sie unmittelbar durch Umbördelung und/oder mittels eines die zugeordneten Bördelbereiche (61) von Magnetbauteil (4) und Rotationsbauteil (5) zusammenhaltenden Bördelteils (62) verbunden sind.

3. Magnetrotationsbauteil (1) nach Anspruch 2, **dadurch gekennzeichnet, dass** die einander zugeordneten Bördelbereiche (61) zu ihrer Verbördelung hakenartig ineinandergreifend angeordnet sind.

4. Magnetrotationsbauteil (1) nach Anspruch 2 oder 3, **dadurch gekennzeichne**t, **dass** das Bördelteil (62) ringartig oder ringsegmentartig ausgebildet ist.

5. Magnetrotationsbauteil (1) nach Anspruch 4, **dadurch gekennzeichnet, dass** das Bördelteil (62) als Bördelring (621) oder Bördelringsegment ausgebildet ist, der bzw. das die Bördelbereiche (61) übergreifend miteinander verklammert.

6. Magnetrotationsbauteil (1) nach einem der Ansprüche 2 bis 5, **dadurch gekennzeichnet, dass** die Bördelbereiche (61) bezüglich der Rotationsachse (r) radial außen und/oder radial innen zum Magnetbauteil (4) angeordnet sind.

7. Magnetrotationsbauteil (1) nach einem der Ansprüche 1 bis 6, **dadurch gekennzeichnet, dass** das Magnetbauteil (4) und/oder das Rotationsbauteil (5) bezüglich der Rotationsachse (r) rotationssymmetrisch und/oder drehsymmetrisch ausgebildet sind.

8. Magnetrotationsbauteil (1) nach einem der Ansprüche 1 bis 7, **dadurch gekennzeichnet, dass** eine Verdrehsicherung (7) gegen eine relative Verdrehung von Magnetbauteil (4) und Rotationsbauteil (5) um die Rotationsachse (r) vorgesehen ist.

9. Magnetrotationsbauteil (1) nach Anspruch 8, **dadurch gekennzeichnet, dass** die Verdrehsicherung (7) an einem Bauteil (4, 5), das heißt an dem Magnetbauteil (4) oder dem Rotationsbauteil (5), mehrere vorzugsweise auf einem Umfangkreis zur Rotationsachse (r) und insbesondere umfänglich gleich beabstandet angeordnete Zapfen (71) aufweist, die jeweils axial in eine zugeordnete an dem anderen Bauteil (5, 4), das heißt an dem Rotationsbauteil (5) oder dem Magnetbauteil (4), vorgesehene Ausnehmung (72) eingreifen.

10. Magnetrotationsbauteil (1) nach Anspruch 9, **dadurch gekennzeichne**t, dass die Ausnehmungen jeweils als Sackausnehmung (721) ausgebildet sind, wobei die Zapfen in einer Verbindungsposition, in der das Magnetbauteil (4) über die Bördelung (6) mit dem Rotationsbauteil (5) verbunden angeordnet ist, in der Sackausnehmung (721) bodenseitig anliegend angeordnet sind.

11. Magnetrotationsbauteil (1) nach Anspruch 10, **dadurch gekennzeichnet, dass** Magnetbauteil (4) und Rotationbauteil (5) in der Verbindungsposition axial über einen Spalt (8) beabstandet und insbesondere unter axialer Vorspannung angeordnet sind.

12. Magnetrotationsbauteil (1) nach Anspruch 10 oder 11, **dadurch gekennzeichnet, dass** die axiale Höhe (h) der Zapfen (71) größer als die axiale Tiefe (t) der jeweils zugeordneten Ausnehmung (72) ist.

13. Magnetrotationsbauteil (1) nach einem der Ansprüche 1 bis 12, **dadurch gekennzeichnet, dass** das Magnetbauteil (4) und/oder das Rotationsbauteil (5) jeweils einstückig ausgebildet sind.

14. Magnetrotationsbauteil (1) nach einem der Ansprüche 1 bis 13, **dadurch gekennzeichnet, dass** das Magnetbauteil (4) als Spritzgussteil, Pressteil oder Sinterteil jeweils aus kunststoffgebundenen Dauermagnetteilchen ausgebildet ist.

## Claims

1. Magnetic rotation component (1) formed as an impeller (2) for a liquid pump, such as a water pump or auxiliary coolant pump, comprising a magnet component (4) and a rotation component (5) with an axis of rotation (r), the magnet component (4) and the rotation component (5) each having a flanged region (61) and the magnet component (4) being formed as a ring-like magnet, in particular as a ring magnet or ring-segment magnet, the impeller (2) comprises a blade part (51) and the rotation part (5) is formed as the blade part (51) and the magnet component (4) and the blade part (51) are connected securely together, the magnet component (4) and the blade part (51) are arranged securely connected to each other by means of a flange (6) and the blade part (51) is formed with a hollow shaft (53) for mounting on an axle or shaft, **characterized in that** the magnet component (4) comprises a permanent magnet and the flanged regions (61) of the magnet component (4) and the rotation component (5) overlap to form the flange (6).

2. Magnetic rotation component (1) according to Claim 1, **characterized in that** the magnet component (4) and the rotation component (5) comprise in each case at least one in particular ring-shaped or ring segment-shaped flanged region (61), in which they are connected directly by crimping and/or by means of a flanging part (62) which holds together the associated flanged regions (61) of the magnet component (4) and rotation component (5).

3. Magnetic rotation component (1) according to Claim 2, **characterized in that** the flanged regions (61) which are associated with each other are arranged interlocking in a hook-like manner for their connection by flanging.

4. Magnetic rotation component (1) according to Claim 2 or 3, **characterized in that** the flanging part (62) is formed in ring-like or ring-segment-like manner.

5. Magnetic rotation component (1) according to Claim 4, **characterized in that** the flanging part (62) is formed as a flanging ring (621) or flanging ring segment which clamps the flanged regions (61) together by engaging over them.

6. Magnetic rotation component (1) according to one of Claims 2 to 5, **characterized in that** the flanged regions (61) are arranged radially externally and/or radially internally to the magnet component (4) with respect to the axis of rotation (r).

7. Magnetic rotation component (1) according to one of Claims 1 to 6, **characterized in that** the magnet component (4) and/or the rotation component (5) are formed rotationally symmetrically and/or circularly symmetrically with respect to the axis of rotation (r).

8. Magnetic rotation component (1) according to one of Claims 1 to 7, **characterized in that** an anti-twist device (7) for securing against relative twisting of the magnet component (4) and rotation component (5) about the axis of rotation (r) is provided.

9. Magnetic rotation component (1) according to Claim 8, **characterized in that** the anti-twist device (7) comprises on one component (4, 5), that is to say on the magnet component (4) or the rotation component (5), a plurality of pins (71) preferably arranged on a peripheral circle relative to the axis of rotation (r) and in particular peripherally equally spaced apart, which in each case engage axially in an associated cutout (72) provided on the other component (5, 4), that is to say on the rotation component (5) or the magnet component (4).

10. Magnetic rotation component (1) according to Claim 9, **characterized in that** the cutouts are formed in each case as blind cutouts (721), the pins, in a connection position in which the magnet component (4) is arranged connected to the rotation component (5) by means of the flanging (6), being arranged lying on the base in the blind cutout (721) .

11. Magnetic rotation component (1) according to Claim 10, **characterized in that** the magnet component (4) and rotation component (5) in the connection position are arranged axially spaced apart by means of a gap (8) and in particular under axial initial tension.

12. Magnetic rotation component (1) according to Claim 10 or 11, **characterized in that** the axial height (h) of the pins (71) is greater than the axial depth (t) of the respectively associated cutout (72).

13. Magnetic rotation component (1) according to one of Claims 1 to 12, **characterized in that** the magnet component (4) and/or the rotation component (5) are in each case formed in one piece.

14. Magnetic rotation component (1) according to one of Claims 1 to 13, **characterized in that** the magnet component (4) is formed as an injection-molded part, pressed part or sintered part in each case from plastics-bound permanent magnet particles.

## Revendications

1. Composant rotatif magnétique (1) formé comme roue à ailettes (2) pour une pompe à liquide, telle qu'une pompe à eau ou une pompe à réfrigérant supplémentaire, composant rotatif magnétique qui présente un composant magnétique (4) et un composant rotatif (5) avec un axe de rotation (r), le composant magnétique (4) et le composant rotatif (5) présentant chacun une zone de sertissage (61) et le composant magnétique (4) étant réalisé sous forme d'aimant de type anneau, en particulier sous forme d'aimant annulaire ou d'aimant à segment annulaire, la roue à ailettes (2) comprend une partie à ailettes (51) et le composant rotatif (5) est réalisé sous la forme d'une partie à ailettes (51) et le composant magnétique (4) et la partie à ailettes (51) sont reliés de manière fixe l'un à l'autre, le composant magnétique (4) et la partie à ailettes (51) sont disposés de manière fixe l'un à l'autre par l'intermédiaire d'un sertissage (6) et la partie à ailettes (51) est réalisée avec un arbre creux (53) pour le montage sur un axe ou un arbre, **caractérisé en ce que** le composant magnétique (4) présente un aimant permanent et que les zones de sertissage (61) du composant magnétique (4) et du composant de rotation (5) se chevauchent pour former le sertissage (6).

2. Composant rotatif magnétique (1) selon la revendication 1, **caractérisé en ce que** le composant magnétique (4) et le composant rotatif (5) présentent chacun au moins une zone de sertissage (61), en particulier annulaire ou en forme de segment annulaire, dans laquelle ils sont reliés directement par sertissage et/ou au moyen d'une pièce de sertissage (62) maintenant ensemble les zones de sertissage (61) associées du composant magnétique (4) et du composant rotatif (5).

3. Composant rotatif magnétique (1) selon la revendication 2, **caractérisé en ce que** les zones de sertissage (61) associées les unes aux autres sont disposées de manière à s'emboîter les unes dans les autres à la manière d'un crochet pour leur sertissage.

4. Composant rotatif magnétique (1) selon la revendication 2 ou 3, **caractérisé en ce que** la partie de sertissage (62) est conçue en forme d'anneau ou de segment d'anneau.

5. Composant rotatif magnétique (1) selon la revendication 4, **caractérisé en ce que** la pièce de sertissage (62) est réalisée sous la forme d'une bague de sertissage (621) ou d'un segment de bague de sertissage qui enserre les zones de sertissage (61) en les chevauchant.

6. Composant rotatif magnétique (1) selon l'une des revendications 2 à 5, **caractérisé en ce que** les zones de sertissage (61) sont disposées radialement à l'extérieur et/ou radialement à l'intérieur du composant magnétique (4) par rapport à l'axe de rotation (r).

7. Composant rotatif magnétique (1) selon l'une des revendications 1 à 6, **caractérisé en ce que** le composant magnétique (4) et/ou le composant rotatif (5) sont réalisés à symétrie de révolution et/ou à symétrie de rotation par rapport à l'axe de rotation (r).

8. Composant magnétique rotatif (1) selon l'une des revendications 1 à 7, **caractérisé en ce qu'**il est prévu un dispositif anti-rotation (7) pour empêcher une rotation relative du composant magnétique (4) et du composant rotatif (5) autour de l'axe de rotation (r).

9. Composant rotatif magnétique (1) selon la revendication 8, **caractérisé en ce que** le dispositif anti-rotation (7) présente sur un composant (4, 5), c'est-à-dire sur le composant magnétique (4) ou le composant rotatif (5), plusieurs tenons (71) disposés de préférence sur un cercle périphérique par rapport à l'axe de rotation (r) et en particulier équidistants sur la circonférence, qui s'engagent chacun axialement dans un évidement (72) associé prévu sur l'autre composant (5, 4), c'est-à-dire sur le composant de rotation (5) ou le composant magnétique (4).

10. Composant rotatif magnétique (1) selon la revendication 9, **caractérisé en ce que** les évidements sont chacun réalisés sous la forme d'un évidement borgne (721), les tenons étant disposés dans l'évidement borgne (721) en étant appliqués contre le fond dans une position de liaison dans laquelle le composant magnétique (4) est relié au composant rotatif (5) par l'intermédiaire du sertissage (6).

11. Composant rotatif magnétique (1) selon la revendication 10, **caractérisé en ce que** le composant magnétique (4) et le composant rotatif (5) sont espacés axialement par une fente (8) dans la position de liaison et sont en particulier disposés sous précontrainte axiale.

12. Composant rotatif magnétique (1) selon la revendication 10 ou 11, **caractérisé en ce que** la hauteur axiale (h) des tenons (71) est supérieure à la profondeur axiale (t) de l'évidement (72) respectivement associé.

13. Composant rotatif magnétique (1) selon l'une des revendications 1 à 12, **caractérisé en ce que** le composant magnétique (4) et/ou le composant rotatif (5) sont respectivement réalisés d'une seule pièce.

14. Composant rotatif magnétique (1) selon l'une des revendications 1 à 13, **caractérisé en ce que** le composant magnétique (4) est réalisé sous forme de pièce moulée par injection, de pièce pressée ou de pièce frittée, respectivement à partir de particules d'aimant permanent liées par une matière plastique.
